# FASCICULE DE BREVET EUROPEEN

(11) **EP 2 268 524 B1**
(45) Date de publication et mention de la délivrance du brevet: **02.01.2013**
(21) Numéro de dépôt: 09754071.0
(22) Date de dépôt: 05.03.2009
(51) Int. Cl.: B60T 7/12, B60W 30/18, B60W 50/02

(54) **PROCEDE ET SYSTEME DE DIAGNOSTIC DE L'ETAT DE FONCTIONNEMENT D'UN MODE DE DEMARRAGE ASSISTE D'UN VEHICULE AUTOMOBILE**
VERFAHREN UND SYSTEM ZUR DIAGNOSTIZIERUNG DES BETRIEBSSTATUS EINES UNTERSTÜTZTEN STARTMODUS FÜR EIN MOTORFAHRZEUG
METHOD AND SYSTEM FOR DIAGNOSING THE OPERATING STATUS OF AN ASSISTED START-UP MODE FOR A MOTOR VEHICLE

(30) Priorité: 18.04.2008 FR 0852656
(43) Date de publication de la demande: 05.01.2011
(73) Titulaire: Renault S.A.S., 92100 Boulogne-Billancourt (FR)
(72) Inventeur: MONTI, Alessandro, F-92250 La Garenne Colombes (FR)
(86) Numéro de dépôt international: PCT/FR2009/050355
(87) Numéro de publication internationale: WO 2009/144421

(56) Documents cités:
- DE-A1-102007 021 871
- FR-A- 2 828 450
- FR-A- 2 841 199
- FR-A- 2 894 548
- US-A- 5 590 040
- US-A1- 2004 143 695

## Description

L'invention concerne un procédé et un système de diagnostic de l'état de fonctionnement d'un mode de démarrage assisté d'un véhicule automobile.

Actuellement certains véhicules automobiles sont équipés d'un mode de démarrage assisté qui consiste à gérer de manière automatique le frein de stationnement lors du démarrage du véhicule. Le frein de stationnement est un système de freinage supplémentaire par rapport aux freins actionnés par la pédale de frein. Ce frein de stationnement est généralement utilisé pour immobiliser le véhicule lorsque celui-ci est à l'arrêt, et peut également être utilisé pour effectuer un freinage d'urgence lorsque le véhicule est en mouvement.

La gestion automatique du frein de stationnement permet, entre autre, d'aider le conducteur pour effectuer un démarrage en pente, appelé aussi « démarrage en côte ». Le principe du démarrage en pente est de relâcher les freins sur les roues non motrices dès lors que le couple transmis par le moteur aux roues motrices est suffisant pour compenser l'effet de la pente.

Un des problèmes rencontré lors de l'utilisation d'une gestion automatique du démarrage est que cette gestion peut, sous certaines conditions, ne pas demander le desserrage des freins en refusant ainsi le démarrage assisté.

Il est donc utile de pouvoir connaître les conditions qui ont conduit à un tel refus dans le but de diagnostiquer les pannes éventuelles du système de gestion automatique du démarrage. En outre, il peut être intéressant de sauvegarder les traces de ces conditions de refus, mais les sauvegardes de ces conditions peuvent être nombreuses et occuper un espace mémoire important. Il s'agît donc d'équiper les véhicules de moyens adaptés pour économiser l'espace mémoire utilisé par les moyens de sauvegarde.

FR-A-2828450 décrit un système de démarrage contenant toutes les caractéristiques du préambule de la revendication 1.

On peut citer par exemple la demande de brevet britannique GB 2 376 990 qui décrit un système de contrôle d'un frein de stationnement dans lequel on relâche le frein de stationnement lorsque le véhicule est animé d'un déplacement positif et que la pédale d'embrayage atteint une position satisfaisante, mais ce document ne décrit pas un moyen de diagnostiquer les conditions de refus d'un démarrage assisté.

On peut citer également la demande de brevet britannique GB 2 342 967 qui divulgue un dispositif de contrôle d'un frein de stationnement dans lequel on relâche ledit frein lorsque le couple de frein appliqué aux roues est inférieure à un certain seuil. Par ailleurs, on peut citer la demande de brevet français FR 2 828 450 déposée au nom de la demanderesse qui décrit un dispositif d'assistance au démarrage en côte et la demande de brevet français FR 2 841 199, déposée également au nom de la demanderesse, qui divulgue un dispositif de desserrage automatique du frein de stationnement automatique au démarrage. Mais ces documents ne divulguent pas non plus un moyen de diagnostiquer les conditions de refus d'un démarrage assisté.

Un des buts de l'invention est donc de fournir un système et un procédé pour diagnostiquer les conditions de refus d'un démarrage assisté par un mode de gestion automatique.

Un autre but de l'invention est de tracer l'historique de ces conditions avec une occupation mémoire optimisée et la plus faible possible.

L'invention a donc pour objet un système de diagnostic de l'état de fonctionnement d'un mode de démarrage assisté d'un véhicule automobile équipé d'un moteur d'entraînement et d'une boîte de vitesse, comprenant un moyen pour déterminer une information de vitesse de rotation du moteur, une information de position de la pédale d'accélérateur du véhicule, une information de position de la boîte de vitesse et une information de couple transmis aux roues.

Ce système comprend un moyen de détection pour élaborer un signal de dysfonctionnement du démarrage assisté à partir desdites informations reçues, plusieurs moyens de codage pour élaborer un signal de suivi pour chaque information déterminée reçue, et une mémoire pour sauvegarder lesdits signaux de suivi.

En effet, à l'aide d'un moyen de détection et de sauvegarde des conditions de refus d'un démarrage assisté, on peut diagnostiquer les causes de dysfonctionnement du démarrage assisté. A l'aide également d'un moyen de coder les informations sélectionnées qui décrivent au mieux les conditions de fonctionnement du démarrage assisté, on peut diminuer fortement l'occupation de la mémoire prise par ces informations.

Selon un autre mode de réalisation, lorsque le démarrage assisté est en cours de fonctionnement, chaque moyen de codage est apte à modifier ledit signal de suivi en lui attribuant une valeur correspondante à des états distincts de l'information déterminée reçue.

En utilisant une seule variable de suivi par information sélectionnée, on diminue l'occupation de la mémoire car on n'enregistre pas toutes les valeurs de l'information sélectionnée pendant la durée du démarrage assisté, mais on enregistre uniquement au moment où l'on détecte un refus de démarrage assisté, une seule valeur dépendante des conditions de fonctionnement du démarrage assisté. En outre chaque moyen de codage attribue une valeur à une variable de suivi, cette valeur correspond à un état particulier de l'information déterminée. Ces états distincts correspondent donc à des conditions de fonctionnement du démarrage assisté.

Selon encore un autre mode de réalisation, chaque moyen de codage comprend un module de comparaison pour élaborer un signal de condition satisfaisante à partir de la comparaison entre l'information déterminée reçue et un seuil.

En fournissant un moyen simple de coder les informations reçues à l'aide d'une comparaison, on permet de fournir un moyen de faible taille adaptée aux besoins d'économie de place dans les véhicules automobiles, en outre on permet de fiabiliser le système de codage par l'emploi d'un nombre faible de modules de calculs et qui limite les pannes.

Selon un autre mode de réalisation, le moyen de détection élabore un signal d'activation du codage et un signal de validité de signal pour chaque information déterminée reçue, et les états distincts de chaque information reçue sont déterminés à partir du signal de condition satisfaisante, dudit signal de validité de signal et dudit signal d'activation du codage.

On ajoute également un test de validité des signaux pour fiabiliser l'ensemble du système. Egalement, à l'aide de trois signaux : d'un signal de validité, d'un signal d'activation du démarrage assisté et d'un signal de condition satisfaisante, on peut créer des états distincts de condition de fonctionnement.

Selon un autre aspect, l'invention a pour objet un procédé de diagnostic de l'état de fonctionnement d'un mode de démarrage assisté d'un véhicule automobile, dans lequel on détermine une information de vitesse de rotation d'un moteur du véhicule, une information de position de la pédale d'accélérateur du véhicule, une information de position de la boîte de vitesse et une information de couple transmis aux roues.

Dans ce procédé on détecte un dysfonctionnement du démarrage assisté à partir desdites informations reçues, on code chaque information déterminée reçue à l'aide d'un signal de suivi, et on sauvegarde lesdits signaux de suivi.

Selon un autre mode de mise en oeuvre, lorsque le démarrage assisté est en cours de fonctionnement, on code chaque information reçue par la modification dudit signal de suivi en lui attribuant une valeur correspondante à des états distincts de l'information déterminée reçue.

Selon encore un autre mode de mise en oeuvre, on élabore un signal de condition satisfaisante à partir de la comparaison entre l'information déterminée reçue et un seuil avant de coder chaque information reçue.

Selon un autre mode de mise en oeuvre, on élabore un signal d'activation du codage et un signal de validité de signal pour chaque information déterminée reçue, et on détermine les états distincts de chaque information reçue à partir du signal de condition satisfaisante, dudit signal de validité et dudit signal d'activation du codage.

D'autres buts, caractéristiques et avantages de l'invention apparaîtront à la lecture de la description suivante, donnée uniquement à titre d'exemple non limitatif, et faite en référence aux dessins annexés, sur lesquels :
- la figure 1 est une vue schématique d'un système de diagnostic conforme à l'invention ; et
- la figure 2 est une vue schématique d'un mode de réalisation d'un module de détection d'un refus de démarrage assisté ; et
- les figures 3a, 3b, 3c et 3d présentent un organigramme illustrant les principales phases d'un procédé de détection d'un refus de démarrage assisté ; et
- la figure 4 est une vue schématique d'un mode général de réalisation d'un module de codage d'une information de diagnostic ; et
- la figure 5 est une vue schématique d'un mode de réalisation d'un module de codage des informations de diagnostic ; et
- les figures 6a, 6b, 6c et 6d présentent un organigramme illustrant les principales phases d'un procédé de codage d'une information de diagnostic.

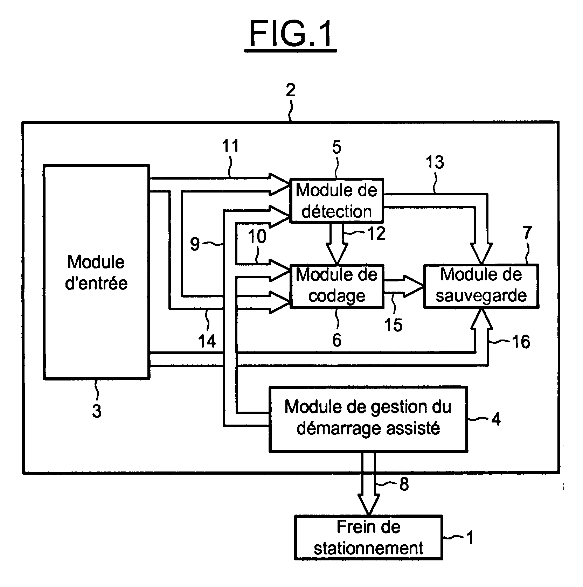

Sur la figure 1, on a représenté une vue schématique d'un système de diagnostic de l'état de fonctionnement d'un mode de démarrage assisté d'un véhicule automobile. Le système de diagnostic est essentiellement hébergé au sein d'une unité de commande électronique 2 (UCE).

L'UCE 2 comprend un module 3 d'entrée, un module 4 de gestion du démarrage assisté, un module 5 de détection, un module 6 de codage et un module 7 de sauvegarde. Le principe de fonctionnement du système de diagnostic consiste à détecter, par l'intermédiaire du module 5 de détection, un refus de démarrage assisté, d'activer un codage des informations utiles à l'aide du module 6 de codage et de sauvegarder lesdites informations codées et certaines autres informations du système par l'intermédiaire du module 7 de sauvegarde afin de tracer l'historique des conditions de refus du démarrage assisté.

Le module 3 d'entrée permet de transmettre des informations utiles, concernant l'état du véhicule aux différents modules 5, 6 et 7 de l'UCE 2, comme par exemple la vitesse du véhicule ou la vitesse de rotation de moteur. Ces informations peuvent être des mesures effectuées à l'aide de capteurs ou être des estimations effectuées par des modules de calcul de l'UCE 2, non représentés sur la figure.

Le module 4 de gestion du démarrage assisté héberge un algorithme pilotant un frein 1 de stationnement par l'envoie de commandes de serrage ou de desserrage, transmises par la connexion 8, en direction du frein 1 de stationnement. Ce module 4 émet également des signaux vers le module 5 de détection, transmis par la connexion 9, et vers le module 6 de codage, transmis par la connexion 10.

Le module 5 de détection détecte un refus de démarrage assisté à partir d'informations provenant du module 4 de gestion et à partir d'informations provenant du module 3 d'entrée et transmises par la connexion 11. Ce module 5 de détection active le codage des informations de diagnostic par l'envoie de signaux, transmis par la connexion 12, en direction du module 6 de codage. Le module 5 permet également d'activer la sauvegarde des informations par l'envoie de signaux, transmis par la connexion 13 vers le module 7 de sauvegarde.

Le module 6 de codage reçoit les informations utiles au diagnostic à coder depuis le module 3 d'entrée et transmises par la connexion 14. Les résultats ainsi codés sont ensuite transmis par la connexion 15, depuis le module 6 de codage en direction du module 7 de sauvegarde.

Le module 7 de sauvegarde enregistre les informations reçues depuis le module 5 de détection, le module 6 de codage et depuis le module 3 d'entrée transmises respectivement par les connexions 13, 15 et 16. Ce module 7 est capable d'enregistrer les informations reçues de façon permanente dans une mémoire non volatile qui peut être, par exemple, de type EEPROM ou « Electrically Erasable Programmable Read Only Memory » en langue anglaise, ou encore « Mémoire Morte Effaçable Electriquement et Programmable ».

En outre, les connexions 8 à 16 sont aptes à faire passer plusieurs signaux différents d'un module à l'autre de l'UCE 2.

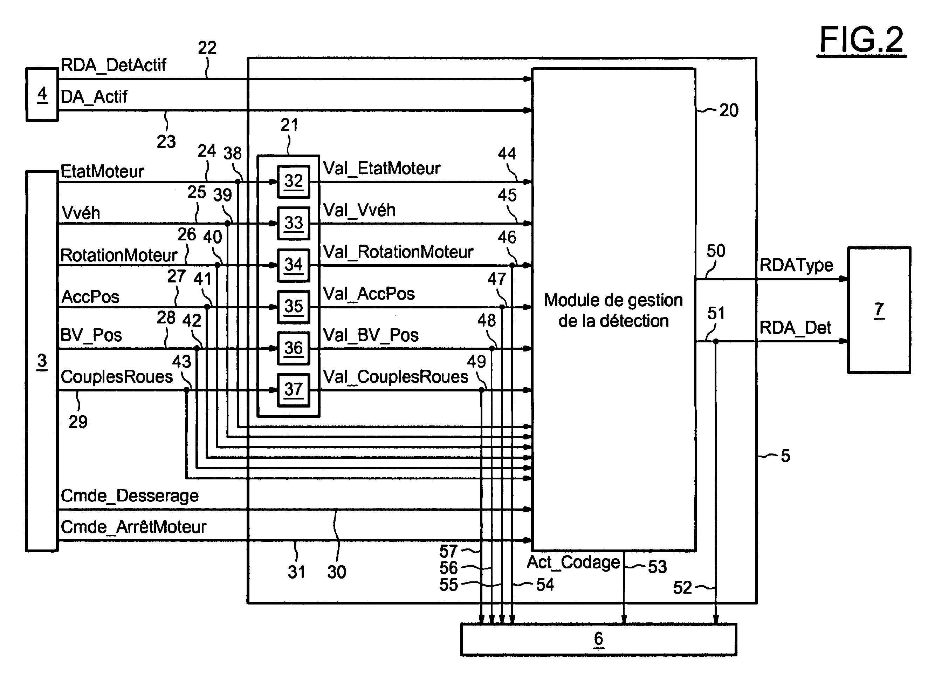

Sur la figure 2, on a représenté une vue schématique d'un mode de réalisation d'un module 5 de détection d'un refus de démarrage assisté. On a également reporté sur la figure 2 des éléments précédemment décrits à la figure 1.

Le module 5 comprend un module 20 de gestion de la détection et un module 21 de test de validité de signaux.

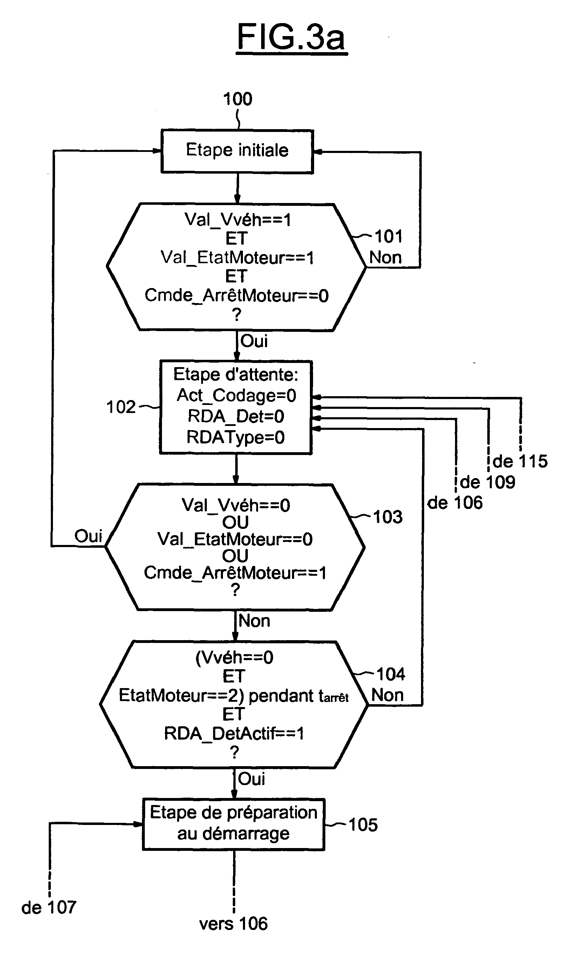

Le module 20 de gestion de la détection permet de mettre en oeuvre un procédé de détection d'un refus de démarrage assisté qui sera décrit ultérieurement aux figures 3a à 3d. Ce module 20 reçoit des signaux d'entrées *RDA_D et Actif* et *DA_Actif,* provenant du module 4 de gestion du démarrage assisté et transmis respectivement par les connexions 22 et 23.
- *RDA_DetActif :* Signal booléen qui vaut :
   - 0 si la détection d'un refus de démarrage assisté est désactivée
   - 1 si la détection d'un refus de démarrage assisté est activée
- *DA_Actif:* Signal booléen qui vaut :
   - 0 si le démarrage assisté est désactivé
   - 1 si le démarrage assisté est activé

Le signal *RDA_DetActif* est en général égal à 1 pour activer une détection d'un refus lorsque le démarrage assisté est activé. Mais lorsque le frein 1 de stationnement est desserré ou lorsque le conducteur active une commande pour effectuer un démarrage manuel sans assistance, le signal *RDA_DetActif* vaut alors 0.

Le module 20 reçoit également des signaux d'entrées *EtatMoteur, Vvéh, RotationMoteur, AccPos, BV_Pos, CoupleRoues, Cmde_Desserrage* et *Cmde_ArrêtMoteur* provenant du module 3 d'entrée et transmis par les connexions 24 à 31 respectivement.
- *EtatMoteur :* Etat du moteur qui vaut :
   - 0 si le moteur est arrêté
   - 1 si le moteur est entraîné
   - 2 si le moteur est considéré comme tournant autonome, c'est-à-dire si le moteur a une vitesse de rotation suffisamment élevée pour s'entraîner lui-même
- *Vvéh :* Information de vitesse du véhicule
- *RotationMoteur :* Information de vitesse de rotation du moteur
- *AccPos :* Information de position de la pédale d'accélérateur du véhicule
- *BV_Pos:* Information de position de la boîte de vitesse, ou encore, signal booléen qui vaut :
   - 0 si aucune vitesse n'est engagée (appelé « point mort »)
   - 1 si au moins une vitesse est engagée (une vitesse de marche avant ou de marche arrière)
- *CoupleRoues :* Information de couple transmis aux roues
- *Cmde_Desserrage :* Signal booléen qui vaut :
   - 0 s'il n'y a pas de demande de desserrage du frein de stationnement
   - 1 s'il y a une demande de desserrage du frein de stationnement
- *Cmde_ArrêtMoteur:* Signal booléen qui vaut :
   - 0 si le conducteur ne demande pas un arrêt du moteur
   - 1 si le conducteur demande un arrêt du moteur

Le module 21 de test de validité de signaux permet de tester si certains signaux reçus sont valides. Sur la figure 2, seuls certains signaux sont testés. On pourra avantageusement tester la validité de tous les signaux d'entrées du module 5 de détection. Le module 21 comprend des modules 32 à 37 de test pour tester la validité des signaux reçus respectivement par les connexions 38 à 43. Chaque module 32 à 37 de test est capable de générer un signal booléen de validité en fonction du résultat du test. Le module 21 génère les signaux suivants :
- *Val_EtatMoteur :* Signal booléen de validité du signal *EtatMoteur,* qui vaut :
   - 0 si le signal *EtatMoteur* est invalide
   - 1 si le signal *EtatMoteur* est valide
- *Val_Vvéh :* Signal booléen de validité du signal *Vvéh,* qui vaut :
   - 0 si le signal *Vvéh* est invalide
   - 1 si le signal *Vvéh* est valide
- *Val_RotationMoteur :* Signal booléen de validité du signal *RotationMoteur,* qui vaut :
   - 0 si le signal *RotationMoteur* est invalide
   - 1 si le signal *RotationMoteur* est valide
- *Val_AccPos:* Signal booléen de validité du signal *AccPos,* qui vaut :
   - 0 si le signal *AccPos* est invalide
   - 1 si le signal *AccPos* est valide

Par exemple : *DA_Actif* vaut 0 si *Val_AccPos* vaut 0 ;
- *Val_BV_Pos :* Signal booléen de validité du signal *BV_Pos,* qui vaut :
   - 0 si le signal *BV_Pos* est invalide
   - 1 si le signal *BV_Pos* est valide
- *Val_CoupleRoues:* Signal booléen de validité du signal *CoupleRoues,* qui vaut :
   - 0 si le signal *CoupleRoues* est invalide
   - 1 si le signal *CoupleRoues* est valide

On peut décrire des exemples de tests de la validité d'un signal qui peuvent être effectués par les modules 32 à 37 de test. On peut, par exemple, décrire le test de validité du signal *Val_RotationMoteur.* Le signal *RotationMoteur* est considéré comme invalide (c'est-à-dire que le signal *Val_RotationMoteur* vaut 0) si, par exemple, la valeur reçue par le module 34 est en dehors d'une plage de variation acceptable, cette plage étant comprise entre une valeur minimum et une valeur maximum. Le signal *RotationMoteur* peut aussi être considéré invalide s'il n'est pas reçu par l'intermédiaire de plusieurs trame émises depuis le module 3 d'entrée sur la connexion 40 pendant un certain temps, par exemple pendant plus de 1 seconde, ou encore si le signal *RotationMoteur* n'est pas cohérent (par *exemple : RotationMoteur>0* et le moteur est également déclaré à l'arrêt *EtatMoteur=0).*

Le module 20 reçoit également les signaux de validité cités précédemment *Val_EtatMoteur, Val_Vvéh, Val_RotationMoteur, Val_AccPos, Val_BV_Pos* et *Val_CoupleRoues* provenant du module 21 et transmis par les connexions 44 à 49 respectivement.

A partir d'un procédé de détection d'un refus de démarrage assisté qui peut être implémenté dans le module 20 de gestion de la détection, le module 20 génère des signaux de sortie suivants :
- *RDAType :* type de refus de démarrage assisté et qui vaut :
   - 0 qui signifie que le signal a été initialisé
   - 1 si le refus de démarrage assisté est du premier type « calage moteur »
   - 2 si le refus de démarrage assisté est du deuxième type « démarrage avec frein serré »
- *RDA_Det :* Signal booléen qui vaut :
   - 0 s'il n'y a pas un refus de démarrage assisté détecté
   - 1 si un refus de démarrage assisté est détecté
- *Act_Codage :* Signal booléen qui vaut :
   - 0 si le codage des informations est désactivé
   - 1 si le codage des informations est activé

Le signal *RDA_Det* permet de signaler au module 6 de codage et au module 7 de sauvegarde qu'un refus de démarrage assisté a été détecté. On considère qu'un refus de démarrage assisté est un dysfonctionnement du démarrage assisté, le signal d'un refus est donc équivalent à un signal de dysfonctionnement.

Le signal *Act_Codage* permet d'activer le codage des informations de diagnostic, en activant le module 6 de codage. Le signal *RDAType* permet de distinguer le type de refus de démarrage assisté. On notera qu'il existe deux types de refus de démarrage assisté :
- un premier type « calage moteur » : qui décrit une situation où, au cours du démarrage assisté, le moteur cale avec le frein 1 de stationnement serré, sans activation de la commande *Cmde_Desserrage* de desserrage dudit frein 1, et avec une volonté du conducteur de démarrer le véhicule ; et
- un deuxième type « démarrage avec frein serré » : qui décrit une situation où, au cours du démarrage assisté, le véhicule démarre avec le frein 1 de stationnement serré et sans activation de la commande *Cmde_Desserrage* de desserrage dudit frein 1.

On considère que le conducteur a la volonté de démarrer le véhicule si au moins deux conditions sont satisfaites sur les trois suivantes :
- le conducteur engage un rapport de vitesse ;
- le conducteur enfonce la pédale d'accélération au-delà d'un certain seuil, noté *AccPosMin,* de position de pédale d'accélération ;
- le couple transmis aux roues est supérieur à un seuil, noté *CoupleRouesMin.*

En effet, si les trois conditions précédentes sont toutes satisfaites un démarrage assisté est réalisé sans refus. Dans le cas contraire, on active un signal de refus du démarrage assisté par l'intermédiaire du module 5 de détection.

Les signaux *RDAType* et *RDA_Det* sont transmis respectivement par les connexions 50 et 51 en direction du module 7 de sauvegarde. Les signaux *RDA_Det, Act_Codage ,* ainsi que les signaux de validité *Val_RotationMoteur, Val_AccPos, Val_BV-Pos* et *Val_CoupleRoues* sont transmis respectivement par les connexions 52 à 57 en direction du module 6 de codage.

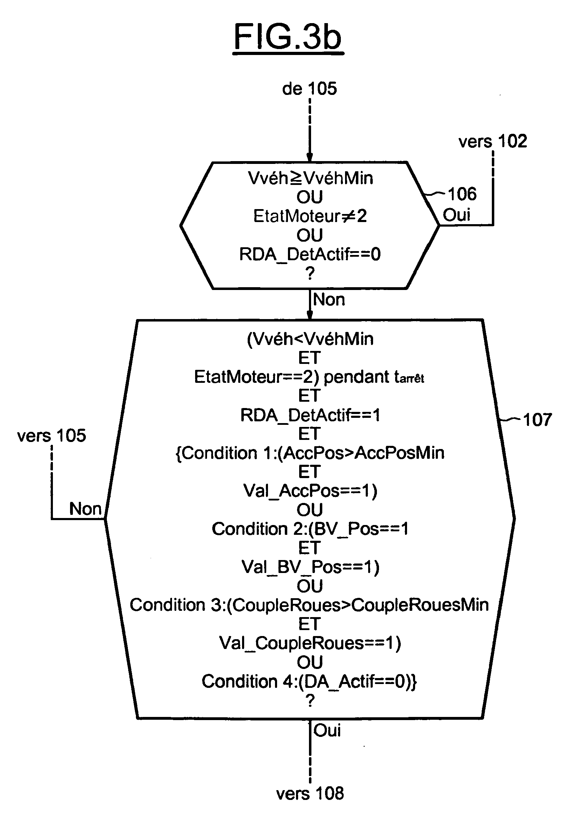

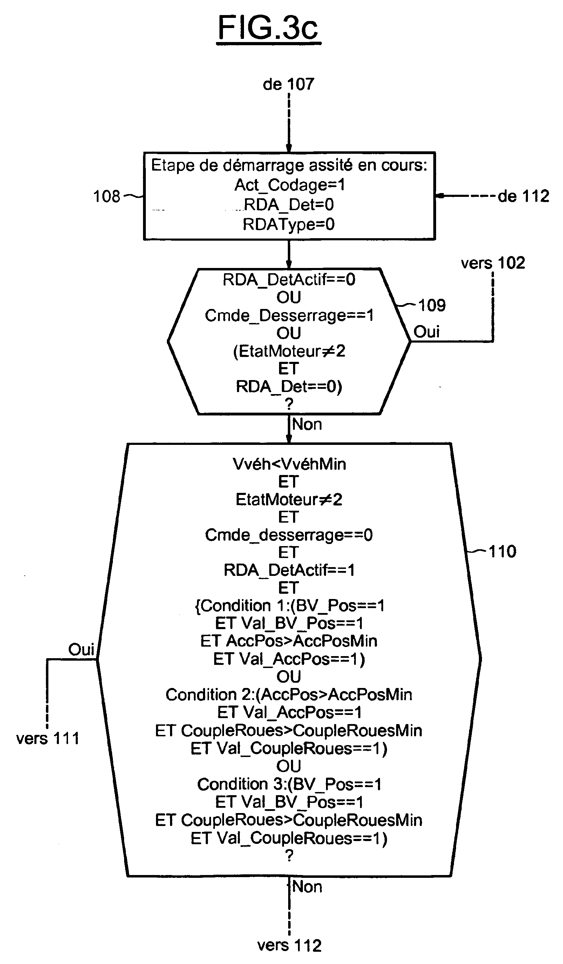

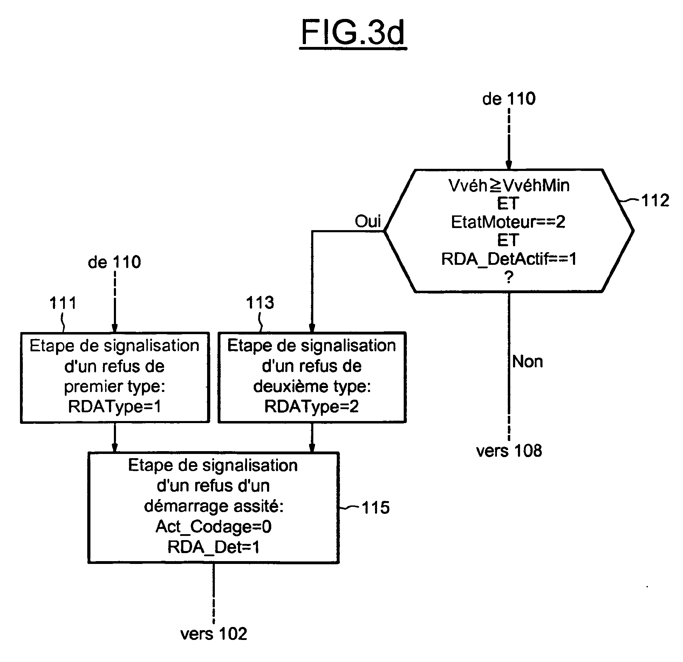

Sur les figures 3a, 3b, 3c et 3d on a représenté un organigramme illustrant les principales phases d'un procédé de détection d'un refus de démarrage assisté. Le procédé commence par une étape 100 initiale. Cette étape est effectuée dès qu'un démarrage assisté est activé. Après cette étape 100 initiale, on effectue une étape 101 de comparaison dans laquelle on test la validité des signaux *Val_Vvéh* et *Val_EtatMoteur* et la valeur du signal *Cmde_ArrêtMoteur.* On considère les trois conditions suivantes :
- l'information de vitesse du véhicule est valide (*Val_Vvéh* vaut 1)
- l'information de l'état du moteur est valide (*Val_EtatMoteur* vaut 1)
- le conducteur n'a pas demandé un arrêt du moteur (*Cmde_ArrêtMoteur* vaut 0).

Si ces trois conditions sont satisfaites, on passe à une étape 102 d'attente, dans le cas contraire, on effectue à nouveau l'étape 100 initiale. Par ailleurs, on peut tester la validité de ces trois conditions, à tout instant, pendant la durée d'exécution du procédé, et si l'une de ces trois conditions n'est pas satisfaite on revient à l'étape 100 initiale.

Dans l'étape 102 d'attente, dans un premier temps on initialise les signaux suivants à la valeur nulle :
- *Act_Codage =0*
- *RDA_Det* =*0*
- *RDA Type* =*0*

Puis, dans un deuxième temps on effectue des étapes 103 et 104 de comparaison pour tester si le véhicule peut être considéré à l'arrêt.

A l'étape 103 de comparaison on test la validité des trois conditions suivantes :
- l'information de vitesse du véhicule est invalide (*Val_Vvéh* vaut 0)
- l'information de l'état du moteur est invalide (*Val_EtatMoteur* vaut 0)
- le conducteur a demandé un arrêt du moteur (*Cmde_ArrêtMoteur* vaut 1).

Si au moins une de ces trois conditions est satisfaite, on retourne à l'étape 100 initiale, dans le cas contraire on effectue l'étape 104 de comparaison suivante.

A l'étape 104 de comparaison, on test la validité des deux conditions suivantes :
- l'information de vitesse du véhicule est nulle (V*véh* vaut 0), et le moteur est dans l'état tournant autonome (*EtatMoteur* vaut 2) pendant un temps *t_{arrêt}* d'arrêt
- la détection d'un refus de démarrage assisté est activée (*RDA_DetActif vaut* 1).

Si les deux conditions sont satisfaites, on considère que le véhicule est à l'arrêt avec le moteur dans l'état tournant autonome et on effectue une étape 105 de préparation au démarrage, dans le cas contraire on effectue à nouveau l'étape 102 d'attente.

Au cours de l'étape 105 de préparation au démarrage, on effectue des étapes 106 et 107 de comparaison pour tester si les conditions sont satisfaites pour considérer qu'un démarrage assisté est en cours. On effectue pour cela l'étape 106 de comparaison dans laquelle on test la validité des trois conditions suivantes :
- l'information de vitesse du véhicule est supérieur ou égal au seuil *VvéhMin* de vitesse de véhicule (*Vvéh>*=*VvéhMin)*
- le moteur n'est plus considéré comme étant dans un état tournant autonome (*EtatMoteur* différent de 2)
- la détection d'un refus de démarrage assisté est désactivé (*RDA_*DetActif vaut 0), par exemple dans le cas où le frein 1 de stationnement n'est pas serré.

Si au moins une de ces trois conditions est satisfaite, on retourne à l'étape 102 d'attente, dans le cas contraire on effectue l'étape 107 de comparaison suivante. Par exemple, si le moteur n'est plus dans un état tournant autonome ou si le véhicule accélère de manière à ce que la vitesse du véhicule dépasse le seuil *VvéhMin* de vitesse on retourne à l'étape 102 d'attente.

A l'étape 107 de comparaison, on effectue les tests de validité des trois conditions suivantes :
- l'information de vitesse du véhicule est strictement inférieure au seuil *VvéhMin* de vitesse de véhicule (*Vvéh*<*VvéhMin),* et le moteur est dans l'état tournant autonome (*EtatMoteur* vaut 2) pendant le temps *t_{arrêt}* d'arrêt
- la détection d'un refus de démarrage assisté est activée (*RDA_*DetActif vaut 1).
- { au moins une des quatre conditions suivantes est satisfaite :
   - condition 1 : le conducteur enfonce la pédale d'accélérateur du véhicule (*AccPos>AccPosMin*) et l'information de position de la pédale d'accélérateur est valide (*Val_AccPos* vaut 1)
   - condition 2 : le conducteur engage un rapport de vitesse (*BV_Pos* vaut 1) et l'information d'un rapport engagé est valide (*Val_ BV_Pos* vaut 1)
   - condition 3 : le couple transmis aux roues est supérieur à un seuil minimum (*CoupleRoues> CoupleRouesMin*) et l'information du couple transmis aux roues est valide (*Val_CoupleRoues* vaut 1)
   - condition 4 : le démarrage assisté est désactivé (*DA_Actif* vaut 0) }

Si ces trois conditions sont satisfaites, on effectue une étape 108 de démarrage assisté en cours suivante, et on effectue à nouveau l'étape 105 de préparation au démarrage dans le cas contraire.

A l'étape 108, dans un premier temps, on modifie les signaux suivants de manière à obtenir :
- *Act_Codage* =1
- *RDA_Det* =0
- *RDA Type* =0

Puis, dans un deuxième temps, on effectue des étapes 109, 110 et 112 de comparaison pour détecter si un refus de démarrage assisté est activé.

A l'étape 109 de comparaison, on test la validité des trois conditions suivantes :
- la détection d'un refus de démarrage assisté est désactivée (*RDA_DetActif* vaut 0)
- la commande de desserrage du frein de stationnement est envoyée (*Cmde_Desserrage* vaut 1)
- le moteur n'est pas dans un état tournant autonome (*EtatMoteur* différent de 2) et il n'y a pas de détection d'un refus de démarrage assisté (*RDA_Det* vaut 0).

Si au moins une de ces trois conditions est satisfaite, on retourne à l'étape 102 d'attente, dans le cas contraire on effectue l'étape 110 de comparaison suivante.

A l'étape 110 de comparaison, on effectue un test de validité pour détecter si un refus de démarrage assisté de premier type est activé en effectuant les tests de validité des cinq conditions suivantes :
- l'information de vitesse du véhicule est strictement inférieure au seuil *VvéhMin* de vitesse de véhicule (*Vvéh<VvéhMin),*
- le moteur n'est pas dans l'état tournant autonome (*EtatMoteur* différent de 2)
- la commande de desserrage du frein de stationnement n'est pas envoyée (*Cmde_Desserrage* vaut 0)
- la détection d'un refus de démarrage assisté est activée (*RDA_DetActif vaut* 1)
- { au moins une des trois conditions suivantes est satisfaite :
   - condition 1 : un rapport de vitesse est engagé (*BV_Pos* vaut 1) et l'information de position de la boîte de vitesse est valide (*Val_BV_Pos* vaut 1) et le conducteur enfonce la pédale d'accélérateur du véhicule (*AccPos>AccPosMin*) et l'information de position de la pédale d'accélérateur est valide (*Val_AccPos* vaut 1)
   - condition 2 : le conducteur enfonce la pédale d'accélérateur du véhicule (*AccPos>AccPosMin*) et l'information de position de la pédale d'accélérateur est valide (*Val_AccPos* vaut 1) et le couple transmis aux roues est strictement supérieur à un seuil minimum (*CoupleRoues> CoupleRouesMin*) et l'information du couple transmis aux roues est valide (*Val_CoupleRoues* vaut 1)
   - condition 3 : un rapport de vitesse est engagé (*BV_Pos* vaut 1) et l'information de position de la boîte de vitesse est valide (*Val_BV_Pos* vaut 1) et le couple transmis aux roues est strictement supérieur à un seuil minimum (*CoupleRoues> CoupleRouesMin*) et l'information du couple transmis aux roues est valide (*Val_CoupleRoues* vaut 1) }

Si ces cinq conditions sont satisfaites, cela signifie qu'un refus de premier type est détecté, dans ce cas on effectue une étape 111 de signalisation d'un refus de premier type, dans le cas contraire on effectue une étape 112 de comparaison.

A l'étape 111 de signalisation d'un refus de premier type, on modifie la valeur du signal *RDAType,* en lui affectant la valeur 1 (*RDAType* vaut 1), ce qui signifie qu'un refus de démarrage assisté de premier type a été détecté. Après cette étape 111 de signalisation, on effectue une étape 115 de signalisation d'un refus d'un démarrage assisté qui sera décrite ultérieurement.

A l'étape 112 de comparaison, on effectue un test de validité pour détecter si un refus de démarrage assisté de deuxième type est activé en effectuant les tests de validité des trois conditions suivantes :
- l'information de vitesse du véhicule est supérieure ou égale au seuil *VvéhMin* de vitesse de véhicule (*Vvéh>= VvéhMin*),
- le moteur est dans l'état tournant autonome (*EtatMoteur* vaut 2)
- la détection d'un refus de démarrage assisté est activée (*RDA_DetActif vaut* 1)

Si ces trois conditions sont satisfaites, cela signifie qu'un refus de deuxième type est détecté, dans ce cas on effectue une étape 113 de signalisation d'un refus de deuxième type, dans le cas contraire on effectue l'étape 108 de démarrage assisté en cours.

A l'étape 113 de signalisation d'un refus de deuxième type, on modifie la valeur du signal *RDAType,* en lui affectant la valeur 2 (*RDAType* vaut 2), ce qui signifie qu'un refus de démarrage assisté de deuxième type a été détecté. Après cette étape 113 de signalisation, on effectue l'étape 115 de signalisation d'un refus d'un démarrage assisté.

A l'étape 115 de signalisation d'un refus d'un démarrage assisté, on modifie le signal *RDA_Det,* en lui affectant la valeur 1 (*RDA_Det* vaut 1), ce qui signifie qu'un refus de démarrage assisté a été détecté. On modifie également le signal *Act_Codage,* en lui affectant la valeur 0 (*Act_Codage* vaut 0), ce qui signifie qu'on arrête le codage des informations de diagnostic. Après l'étape 115 de signalisation on effectue l'étape 102 d'attente.

Le procédé de détection du refus de démarrage assisté permet à partir des signaux de diagnostics établis par le module 3 d'entrée de signaler, par l'activation du signal *RDA_Det,* qu'un refus de démarrage a été détecté. Le procédé permet également de déterminer le type de refus et le signal par la gestion du signal *RDAType.* En outre, le procédé active, par l'intermédiaire du signal *Act_Codage,* le module 6 de codage dès qu'un démarrage assisté est en cours.

Les étapes du procédé de détection peuvent être mises en oeuvre par un circuit électronique, ou sous la forme logicielle, ou dans un automate programmable, implémenté dans le module 5 de détection.

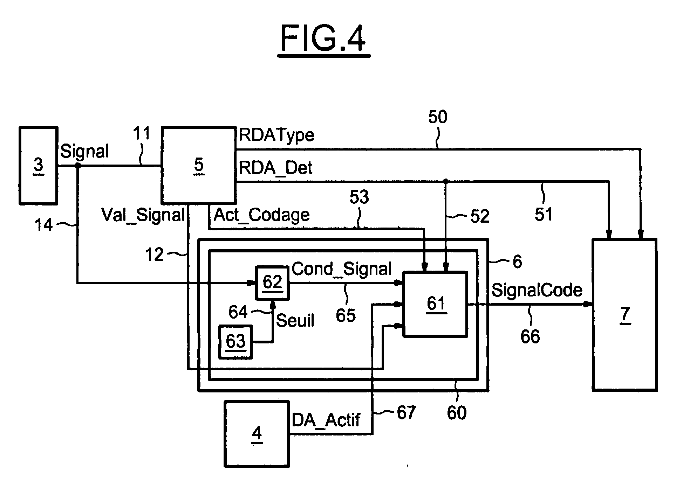

Sur la figure 4, on a représenté une vue schématique d'un mode général de réalisation d'un module de codage d'une information de diagnostic. On a également reporté sur la figure 4 des éléments précédemment décrits aux figures 1 et 2.

Le module 6 de codage comporte un moyen 60 de codage pour coder une information *Signal* de diagnostic émise depuis le module 3 d'entrée et transmise par la connexion 14. Cette information *Signal* peut être, par exemple, l'information *EtatMoteur, Vvéh* ou *RotationMoteur.*

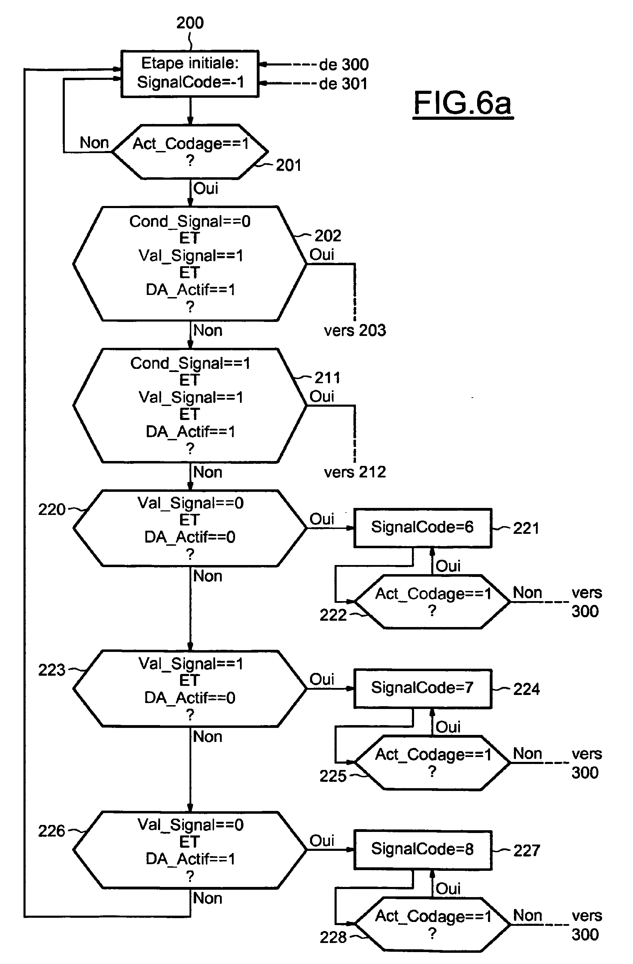

Le moyen 60 de codage permet de recevoir un signal *Signal,* ou une information, depuis le module 3 d'entrée, de comparer cette information *Signal* avec un seuil, noté *Seuil,* pour émettre un signal *Cond_Signal* booléen de condition satisfaisante en fonction du résultat de la comparaison. Puis, à l'aide d'un procédé de codage, qui sera décrit ultérieurement aux figures 6a à 6d, on élabore un signal *SignalCode* de suivi en fonction de l'évolution temporelle du signal *Cond_Signal* au cours du démarrage assisté. L'élaboration du signal *SignalCode* de suivi est activé lorsque le signal d'entrée *Act_Codage* vaut 1 et on sauvegarde en mémoire ledit signal de suivi, par l'intermédiaire du module 7 de sauvegarde, lorsqu'un refus de démarrage assisté est détecté, c'est-à-dire lorsque le signal *RDA_Det* vaut 1.

Le moyen 60 de codage comprend un bloc 61 de codage, un moyen 62 de comparaison et un module 63 d'élaboration du signal *Seuil* configurable. Le module 62 de comparaison compare le signal *Signal,* provenant du module 3 d'entrée et transmis par la connexion 14, avec le signal *Seuil* provenant du module 63 et transmis par une connexion 64. Le module 62 de comparaison émet le résultat *Cond_Signal* de la comparaison, transmis par une connexion 65, en direction du bloc 61 de codage.

Le signal *Cond_Signal* de condition satisfaisante, résultat de la comparaison, est déterminé comme suit :
*Cond_Signal:* Signal booléen qui vaut :
   - 0 si le résultat de la comparaison entre les signaux *Signal* et *Seuil* est faux
   - 1 si le résultat de la comparaison entre les signaux *Signal* et *Seuil* est vrai

Le bloc 61 de codage reçoit également un signal *Val_Signal* depuis le module 5 de détection par la connexion 12, le signal *RDA_Det* depuis le module 5 de détection par la connexion 52, le signal *Act_Codage* depuis le module 5 de détection par la connexion 53, et le signal *DA_Actif* depuis le module 4 de gestion du démarrage assisté par une connexion 67. Le signal *Val_Signal* correspond à un signal booléen de validité qui est généré par le module 21 de test de validité de signaux. Ce signal *Val_Signal* permet de déterminer la validité du signal *Signal :*
- *Val_Signal :* Signal booléen de validité du signal *Signal,* qui vaut :
   - 0 si le signal *Signal* est invalide
   - 1 si le signal *Signal* est valide

Après l'exécution du procédé de codage mis en oeuvre par le bloc 61 de codage, ledit bloc 61 émet le signal de suivi *SignalCode* qui correspond au résultat du procédé de codage et le transmet par une connexion 66 vers le module 7 de sauvegarde.

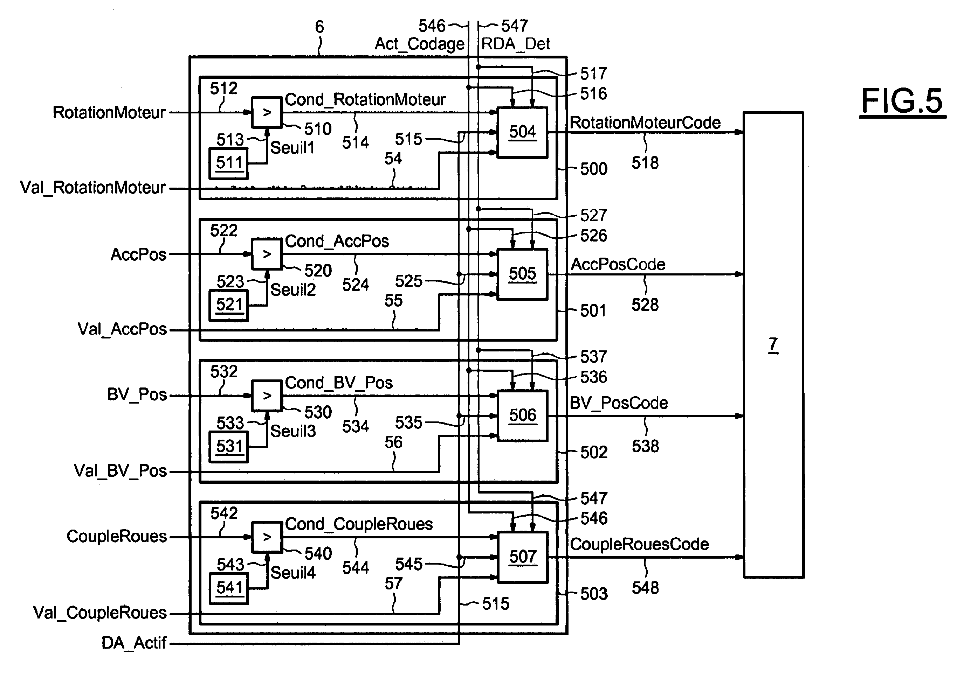

Sur la figure 5 on a représenté une vue schématique d'un mode de réalisation d'un module 6 de codage des informations de diagnostic. On a également reporté sur la figure 5 des éléments précédemment décrits aux figures 1 à 4.

Le module 6 de codage comprend des moyens 500 à 503 de codage pour coder les informations de diagnostic reçues. Chaque moyen 500 à 503 de codage comprend respectivement un bloc 504 à 507 de codage. Les blocs 504 à 507 de codage permettent chacun de mettre en oeuvre un procédé de codage des informations de diagnostic. Ce procédé de codage d'une information de diagnostic sera décrit ultérieurement aux figures 6a à 6d. Le procédé de codage est identique pour chaque bloc 504 à 507 de codage.

Les signaux représentant les informations de diagnostic ont été sélectionnés parmi de nombreux signaux qui rendent compte de l'état général du système. On a sélectionné quatre signaux principaux, *RotationMoteur, AccPos, BV_Pos* et *CoupleRoues,* qui représentent quatre conditions qui doivent être simultanément satisfaites pour générer une commande automatique de desserrage du frein 1 de stationnement.

Le moyen 500 de codage comprend également un moyen 510 de comparaison et un module 511 d'élaboration d'un seuil *Seuil1* configurable. Le moyen 510 de comparaison compare le signal *RotationMoteur,* provenant du module 3 d'entrée et transmis par une connexion 512, avec le seuil *Seuil1* provenant du module 511 et transmis par une connexion 513. Le moyen 510 de comparaison émet le résultat *Cond_RotationMoteur* de la comparaison, transmis par une connexion 514, en direction du bloc 504 de codage. Le signal *Cond_RotationMoteur* de condition satisfaisante, résultat de la comparaison, est déterminé comme suit :
*Cond_RotationMoteur :* Signal booléen qui vaut :
   - 0 si la vitesse de rotation du moteur est insuffisante pour permettre un démarrage assisté, c'est-à-dire si l'information de la vitesse de rotation du moteur *RotationMoteur* est inférieure ou égale au seuil *Seuil1*
   - 1 si la vitesse de rotation du moteur est suffisante pour permettre un démarrage assisté, c'est-à-dire si l'information de la vitesse de rotation du moteur *RotationMoteur* est strictement supérieure au seuil *Seuil1*

Le bloc 504 de codage reçoit également le signal *Val_RotationMoteur* depuis le module 5 de détection par la connexion 54, le signal *DA_Actif* depuis le module 4 de gestion du démarrage assisté par une connexion 515, le signal *Act_Codage* depuis le module 5 de détection par une connexion 516 et le signal *RDA_Det* depuis le module 5 de détection par une connexion 517. Le bloc 504 de codage émet un signal de suivi *RotationMoteurCode* qui correspond au résultat du procédé de codage et le transmet par une connexion 518 vers le module 7 de sauvegarde.

Le moyen 501 de codage comprend également un moyen 520 de comparaison et un module 521 d'élaboration d'un seuil *Seuil2* configurable. Le moyen 520 de comparaison compare le signal *AccPos,* provenant du module 3 d'entrée et transmis par une connexion 522, avec le seuil *Seuil2* provenant du module 521 et transmis par une connexion 523. Le moyen 520 de comparaison émet le résultat *Cond_AccPos* de la comparaison, transmis par une connexion 524, en direction du bloc 505 de codage. Le signal *Cond_AccPos* de condition satisfaisante, résultat de la comparaison, est déterminé comme suit :
*Cond_AccPos* : Signal booléen qui vaut :
   - 0 si la position de la pédale d'accélérateur du véhicule est insuffisante pour permettre un démarrage assisté, c'est-à-dire si l'information de la vitesse position de la pédale d'accélérateur du véhicule *AccPos* est inférieure ou égale au seuil *Seuil2*
   - 1 si la position de la pédale d'accélérateur du véhicule est suffisante pour permettre un démarrage assisté, c'est-à-dire si l'information de la vitesse position de la pédale d'accélérateur du véhicule *AccPos* est strictement supérieure au seuil *Seuil2*

Le bloc 505 de codage reçoit également le signal *Val_AccPos* depuis le module 5 de détection par la connexion 55, le signal *DA_Actif* depuis le module 4 de gestion du démarrage assisté par une connexion 525, le signal *Act_Codage* depuis le module 5 de détection par une connexion 526 et le signal *RDA_Det* depuis le module 5 de détection par une connexion 527. Le bloc 505 de codage émet un signal de suivi *AccPosCode* qui correspond au résultat du procédé de codage et le transmet par une connexion 528 vers le module 7 de sauvegarde.

Le moyen 502 de codage comprend également un moyen 530 de comparaison et un module 531 d'élaboration d'un seuil *Seuil3* configurable. Le moyen 530 de comparaison compare le signal *BV_Pos,* provenant du module 3 d'entrée et transmis par une connexion 532, avec le seuil *Seuil3* provenant du module 531 et transmis par une connexion 533. Le moyen 530 de comparaison émet le résultat *Cond_BV_Pos* de la comparaison, transmis par une connexion 534, en direction du bloc 506 de codage. Le signal *Cond_BV_Pos* de condition satisfaisante, résultat de la comparaison, est déterminé comme suit :
*Cond_BV_Pos* : Signal booléen qui vaut :
   - 0 si aucun rapport de vitesse n'est engagé, c'est-à-dire si l'information de position de la boîte de vitesse est égal au seuil *Seuil3* (avec le *Seuil3* égal à 0)
   - 1 si au moins un rapport de vitesse est engagé, c'est-à-dire si l'information de position de la boîte de vitesse est strictement supérieur audit *Seuil3*

Le bloc 506 de codage reçoit également le signal *Val_BV_Pos* depuis le module 5 de détection par la connexion 56, le signal *DA_Actif* depuis le module 4 de gestion du démarrage assisté par une connexion 535, le signal *Act_Codage* depuis le module 5 de détection par une connexion 536 et le signal *RDA_Det* depuis le module 5 de détection par une connexion 537. Le bloc 506 de codage émet un signal de suivi *BV_PosCode* qui correspond au résultat du procédé de codage et le transmet par une connexion 538 vers le module 7 de sauvegarde.

Le moyen 503 de codage comprend également un moyen 540 de comparaison et un module 541 d'élaboration d'un seuil *Seuil4* configurable. Le moyen 540 de comparaison compare le signal *CoupleRoues,* provenant du module 3 d'entrée et transmis par une connexion 542, avec le seuil *Seuil4* provenant du module 541 et transmis par une connexion 543. Le moyen 540 de comparaison émet le résultat *Cond_CoupleRoues* de la comparaison, transmis par une connexion 544, en direction du bloc 507 de codage. Le signal *Cond_CoupleRoues* de condition satisfaisante, résultat de la comparaison, est déterminé comme suit :
*Cond_CoupleRoues :* Signal booléen qui vaut :
   - 0 si le couple transmis aux roues est insuffisant pour permettre un démarrage assisté, c'est-à-dire si l'information du couple transmis aux roues *CoupleRoues* est inférieure ou égale au seuil *Seuil4*
   - 1 si le couple transmis aux roues est suffisant pour permettre un démarrage assisté, c'est-à-dire si l'information du couple transmis aux roues *CoupleRoues* est strictement supérieure au seuil *Seuil4*

Le bloc 507 de codage reçoit également le signal *Val_CoupleRoues* depuis le module 5 de détection par la connexion 57, le signal *DA_Actif* depuis le module 4 de gestion du démarrage assisté par une connexion 545, le signal *Act_Codage* depuis le module 5 de détection par une connexion 546 et le signal *RDA_Det* depuis le module 5 de détection par une connexion 547. Le bloc 507 de codage émet un signal de suivi *CoupleRouesCode* qui correspond au résultat du procédé de codage et le transmet par une connexion 548 vers le module 7 de sauvegarde.

On notera que les différents seuils *Seuil1* à *Seuil4* sont configurables et sont déterminés en fonction de la pente, de la masse du véhicule, du type de moteur...

De manière similaire, le module 6 de codage peut comprendre d'autres moyens de codage pour coder l'information de diagnostic d'autres signaux.

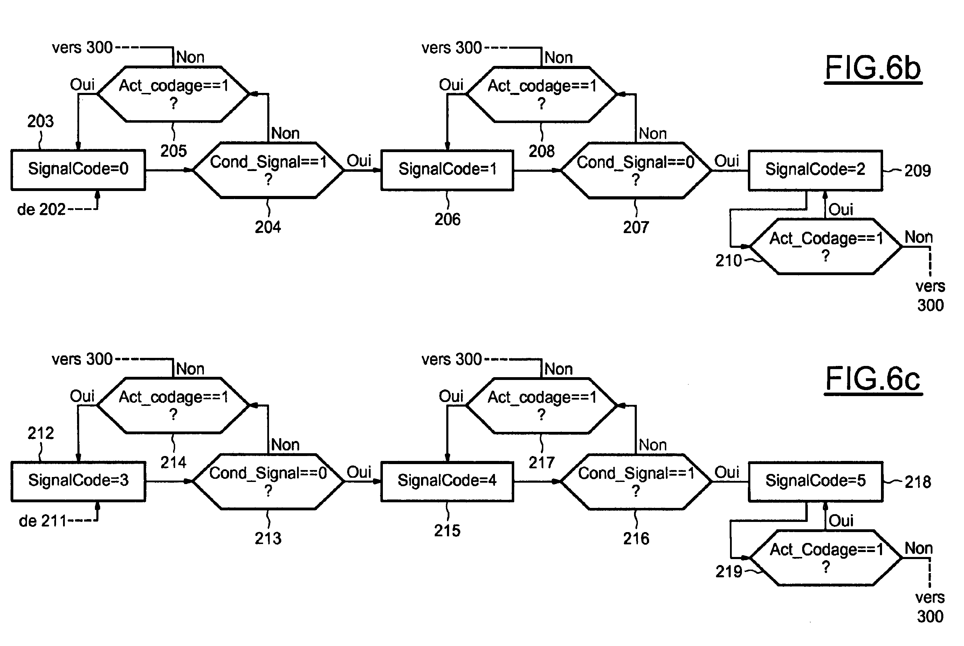

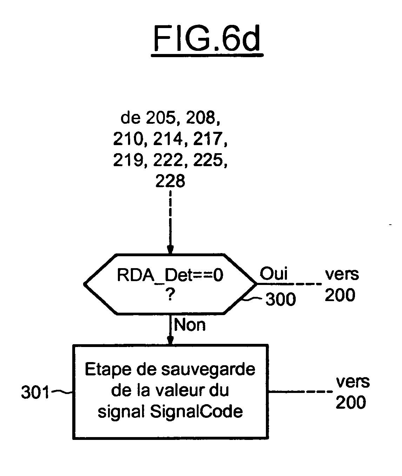

Sur les figures 6a, 6b, 6c et 6d on a représenté un organigramme illustrant les principales phases d'un procédé de codage d'une information de diagnostic. Ce procédé peut être appliqué à toute information sélectionnée en vu de rendre un diagnostic, comme par exemple aux informations *BV_Pos, RotationMoteur, AccPos,* ou *CoupleRoues.*

Le procédé de codage consiste à suivre l'évolution temporelle d'une information *Signal* de diagnostic émise par le module 3 d'entrée. Cette information *Signal* de diagnostic peut changer de valeur au cours du démarrage assisté. Ces différents changements correspondent à des états distincts de l'information *Signal* de diagnostic. En outre, le procédé est apte à déterminer les états distincts de cette information *Signal* de diagnostic et d'affecter une valeur différente au signal *SignalCode* de suivi pour chaque état distinct.

Le procédé de codage commence par une étape 200 initiale. Lors de cette étape 200 on initialise le signal de sortie *SignalCode* à la valeur -1.

Après cette étape 200 initiale, on effectue une étape 201 de comparaison dans laquelle on test la validité de la condition suivante :
- le codage des informations est activé (*Act_Codage* vaut 1)

Si cette condition est vérifiée on effectue une étape 202 de comparaison, dans le cas contraire on effectue à nouveau l'étape 200 initiale.

A l'étape 202 de comparaison on test la validité des trois conditions suivantes :
- le signal de condition satisfaisante est faux (*Cond_Signal* vaut 0)
- l'information *Signal* est valide *(Val_Signal* vaut 1)
- le démarrage assisté est activé (*DA_Acti*f vaut 1).

Si les trois conditions sont vérifiées, on effectue une étape 203, dans le cas contraire on effectue une étape 211 de comparaison suivante.

A l'étape 211 de comparaison on test la validité des trois conditions suivantes :
- le signal de condition satisfaisante est vrai (*Cond_Signal* vaut 1)
- l'information *Signal* est valide (*Val_Signal* vaut 1)
- le démarrage assisté est activé (*DA_Actif* vaut 1).

Si les trois conditions sont satisfaites, on effectue une étape 212, dans le cas contraire on effectue une étape 220 de comparaison suivante.

A l'étape 220 de comparaison on test la validité des deux conditions suivantes :
- l'information *Signal* est invalide (*Val_Signal* vaut 0)
- le démarrage assisté est désactivé (*DA_Actif vaut* 0).

Si les deux conditions sont satisfaites, on effectue une étape 221, dans le cas contraire on effectue une étape 223 de comparaison suivante.

A l'étape 221 on affecte le code 6 au signal *SignalCode* de suivi (*SignalCode* vaut 6), puis on effectue une étape 222 de comparaison dans laquelle on test la valeur du signal *Act_codage.* Si le signal *Act_codage* vaut 1 on effectue à nouveau l'étape 221, dans le cas contraire on arrête le codage de l'information *Signal* reçue et on effectue une étape 300 pour finir le codage.

A l'étape 223 de comparaison on test la validité des deux conditions suivantes :
- l'information *Signal* est valide (*Val_Signal* vaut 1)
- le démarrage assisté est désactivé (*DA_Actif* vaut 0).

Si les deux conditions sont satisfaites, on effectue une étape 224, dans le cas contraire on effectue une étape 226 de comparaison suivante.

A l'étape 224 on affecte le code 7 au signal *SignalCode* de suivi (*SignalCode* vaut 7), puis on effectue une étape 225 de comparaison dans laquelle on test la valeur du signal *Act_codage.* Si le signal *Act_codage* vaut 1 on effectue à nouveau l'étape 224, dans le cas contraire on arrête le codage de l'information *Signal* reçue et on effectue une étape 300 pour finir le codage.

A l'étape 226 de comparaison on test la validité des deux conditions suivantes :
- l'information *Signal* est invalide (*Val_Signal* vaut 0)
- le démarrage assisté est activé (*DA_Actif* vaut 1).

Si les deux conditions sont satisfaites, on effectue une étape 227, dans le cas contraire on effectue à nouveau l'étape 200 initiale.

A l'étape 227 on affecte le code 8 au signal *SignalCode* de suivi (*SignalCode* vaut 8), puis on effectue une étape 228 de comparaison dans laquelle on test la valeur du signal *Act_codage.* Si le signal *Act_codage* vaut 1 on effectue à nouveau l'étape 227, dans le cas contraire on arrête le codage de l'information *Signal* reçue et on effectue une étape 300 pour finir le codage.

A l'étape 203 on affecte le code 0 au signal *SignalCode* de suivi (*SignalCode* vaut 0), puis on effectue une étape 204 de comparaison dans laquelle on test la valeur du signal *Cond_Signal* de condition satisfaisante. Si le signal *Cond_Signal* vaut 1 on effectue une étape 206, dans le cas contraire on effectue une étape 205 de comparaison.

A l'étape 205 de comparaison, on test la valeur du signal *Act_codage.* Si le signal *Act_codage* vaut 1 on effectue à nouveau l'étape 203, dans le cas contraire on arrête le codage de l'information *Signal* reçue et on effectue une étape 300 pour finir le codage.

A l'étape 206 on affecte le code 1 au signal *SignalCode* de suivi (*SignalCode* vaut 1), puis on effectue une étape 207 de comparaison dans laquelle on test la valeur du signal *Cond_Signal* de condition satisfaisante. Si le signal *Cond_Signal* vaut 0 on effectue une étape 209, dans le cas contraire on effectue une étape 208 de comparaison.

A l'étape 208 de comparaison, on test la valeur du signal *Act_codage.* Si le signal *Act_codage* vaut 1 on effectue à nouveau l'étape 206, dans le cas contraire on arrête le codage de l'information *Signal* reçue et on effectue une étape 300 pour finir le codage.

A l'étape 209 on affecte le code 2 au signal *SignalCode* de suivi (*SignalCode* vaut 2), puis on effectue une étape 210 de comparaison dans laquelle on test la valeur du signal *Act_codage.* Si le signal *Act_codage* vaut 1 on effectue à nouveau l'étape 209, dans le cas contraire on arrête le codage de l'information *Signal* reçue et on effectue une étape 300 pour finir le codage.

A l'étape 212 on affecte le code 3 au signal *SignalCode* de suivi (*SignalCode* vaut 3), puis on effectue une étape 213 de comparaison dans laquelle on test la valeur du signal *Cond_Signal* de condition satisfaisante. Si le signal *Cond_Signal* vaut 0 on effectue une étape 215, dans le cas contraire on effectue une étape 214 de comparaison.

A l'étape 214 de comparaison, on test la valeur du signal *Act_codage.* Si le signal *Act_codage* vaut 1 on effectue à nouveau l'étape 212, dans le cas contraire on arrête le codage de l'information *Signal* reçue et on effectue une étape 300 pour finir le codage.

A l'étape 215 on affecte le code 4 au signal *SignalCode* de suivi (*SignalCode* vaut 4), puis on effectue une étape 216 de comparaison dans laquelle on test la valeur du signal *Cond_Signal* de condition satisfaisante. Si le signal *Cond_Signal* vaut 1 on effectue une étape 218, dans le cas contraire on effectue une étape 217 de comparaison.

A l'étape 217 de comparaison, on test la valeur du signal *Act_codage.* Si le signal *Act_codage* vaut 1 on effectue à nouveau l'étape 215, dans le cas contraire on arrête le codage de l'information *Signal* reçue et on effectue une étape 300 pour finir le codage.

A l'étape 218 on affecte le code 5 au signal *SignalCode* de suivi (*SignalCode* vaut 5), puis on effectue une étape 219 de comparaison dans laquelle on test la valeur du signal *Act_codage.* Si le signal *Act_codage* vaut 1 on effectue à nouveau l'étape 218, dans le cas contraire on arrête le codage de l'information *Signal* reçue et on effectue une étape 300 pour finir le codage.

A l'étape 300 de comparaison, on test si un refus de démarrage assisté a été détecté au cours du démarrage assisté. Dans le cas où un refus est détecté, on sauvegarde la valeur du signal *SignalCode* de suivi, dans le cas contraire on retourne à l'étape 200 initiale.

En effet, on effectue l'étape 300 de comparaison dans laquelle on test la valeur du signal *RDA_Det.* Si le signal *RDA_Det* vaut 0 on effectue à nouveau l'étape 200 initiale car il n'y a pas eu de refus détecté. Dans le cas contraire, quand le signal *RDA_Det* vaut 1 on effectue une étape 301 de sauvegarde dans laquelle on enregistre la valeur du signal *SignalCode* de suivi car un refus a été détecté, puis on effectue à nouveau l'étape 200 initiale.

Les étapes du procédé de codage peuvent être mises en oeuvre par un circuit électronique, ou sous la forme logicielle, ou dans un automate programmable, implémenté dans les blocs 504 à 507 de codage.

## Revendications

1. Système de diagnostic de l'état de fonctionnement d'un mode de démarrage assisté d'un véhicule automobile équipé d'un moteur d'entraînement et d'une boîte de vitesse, comprenant un moyen (3) pour déterminer une information de vitesse de rotation du moteur, une information de position de la pédale d'accélérateur du véhicule, une information de position de la boîte de vitesse et une information de couple transmis aux roues, **caractérisé en ce qu'**il comprend un moyen de détection (5) pour élaborer un signal de dysfonctionnement du démarrage assisté à partir desdites informations reçues, plusieurs moyens (500 à 503) de codage pour élaborer un signal de suivi pour chaque information déterminée reçue, et une mémoire (7) pour sauvegarder lesdits signaux de suivi.

2. Système de diagnostic selon la revendication 1, dans lequel, lorsque le démarrage assisté est en cours de fonctionnement, chaque moyen (500 à 503) de codage est apte à modifier ledit signal de suivi en lui attribuant une valeur correspondante à des états distincts de l'information déterminée reçue.

3. Système de diagnostic selon la revendication 2, dans lequel chaque moyen (500 à 503) de codage comprend un module (510, 520, 530, 540) de comparaison pour élaborer un signal de condition satisfaisante à partir de la comparaison entre l'information déterminée reçue et un seuil.

4. Système de diagnostic selon la revendication 3, dans lequel le moyen de détection (5) élabore un signal d'activation du codage et un signal de validité de signal pour chaque information déterminée reçue, et les états distincts de chaque information reçue sont déterminés à partir du signal de condition satisfaisante, dudit signal de validité de signal et dudit signal d'activation du codage.

5. Procédé de diagnostic de l'état de fonctionnement d'un mode de démarrage assisté d'un véhicule automobile, dans lequel on détermine une information de vitesse de rotation d'un moteur du véhicule, une information de position de la pédale d'accélérateur du véhicule, une information de position de la boîte de vitesse et une information de couple transmis aux roues, **caractérisé en ce qu'**on détecte un dysfonctionnement du démarrage assisté à partir desdites informations reçues, on code chaque information déterminée reçue à l'aide d'un signal de suivi, et on sauvegarde lesdits signaux de suivi.

6. Procédé de diagnostic selon la revendication 5, dans lequel, lorsque le démarrage assisté est en cours de fonctionnement, on code chaque information reçue par la modification dudit signal de suivi en lui attribuant une valeur correspondante à des états distincts de l'information déterminée reçue.

7. Procédé de diagnostic selon la revendication 6, dans lequel on élabore un signal de condition satisfaisante à partir de la comparaison entre l'information déterminée reçue et un seuil avant de coder chaque information reçue.

8. Procédé de diagnostic selon la revendication 7, dans lequel on élabore un signal d'activation du codage et un signal de validité de signal pour chaque information déterminée reçue, et on détermine les états distincts de chaque information reçue à partir du signal de condition satisfaisante, dudit signal de validité et dudit signal d'activation du codage.

## Claims

1. System for diagnosing the operating state of an assisted starting mode of a motor vehicle fitted with a drive engine and a gearbox, comprising a means (3) for determining an item of information on the engine rotation speed, an item of information on the position of the accelerator pedal of the vehicle, an item of information on the position of the gearbox and an item of information on the torque transmitted to the wheels, **characterized in that** it comprises a detection means (5) for generating a signal of malfunction of the assisted start based on said items of information received, several encoding means (500 to 503) for generating a monitoring signal for each determined item of information received, and a memory (7) for saving said monitoring signals.

2. Diagnostic system according to Claim 1, wherein, when the assisted start is in operation, each encoding means (500 to 503) is capable of modifying said monitoring signal by allocating thereto a value corresponding to distinct states of the determined item of information received.

3. Diagnostic system according to Claim 2, wherein each encoding means (500 to 503) comprises a comparison module (510, 520, 530, 540) for generating a satisfactory condition signal based on the comparison between the determined item of information received and a threshold.

4. Diagnostic system according to Claim 3, wherein the detection means (5) generates an encoding activation signal and a signal validity signal for each determined item of information received, and the distinct states of each item of information received are determined based on the satisfactory condition signal, on said signal validity signal and on said encoding activation signal.

5. Method for diagnosing the operating state of an assisted starting mode of a motor vehicle, wherein an item of information on the rotation speed of an engine of the vehicle, an item of information on the position of the accelerator pedal of the vehicle, an item of information on the position of the gearbox and an item of information on the torque transmitted to the wheels are determined, **characterized in that** a malfunction of the assisted start is detected based on said items of information received, each determined item of information received is encoded with the aid of a monitoring signal, and said monitoring signals are saved.

6. Diagnostic method according to Claim 5, wherein, when the assisted start is in operation, each item of information received is encoded by the modification of said monitoring signal by allocating thereto a value corresponding to distinct states of the determined item of information received.

7. Diagnostic method according to Claim 6, wherein a satisfactory condition signal is generated based on the comparison between the determined item of information received and a threshold before each item of information received is encoded.

8. Diagnostic method according to Claim 7, wherein an encoding activation signal and a signal validity signal are generated for each determined item of information received and the distinct states of each item of information received are determined based on the satisfactory condition signal, on said validity signal and on said encoding activation signal.

## Patentansprüche

1. System zum Diagnostizieren des Betriebszustands eines unterstützten Startmodus für ein Kraftfahrzeug, das mit einem Antriebsmotor und einem Schaltgetriebe versehen ist, das ein Mittel (3) zum Bestimmen einer Drehzahlinformation des Motors, einer Positionsinformation des Gaspedals des Fahrzeugs, einer Positionsinformation des Schaltgetriebes und einer Information zu dem Moment, das an die Räder übertragen wird, aufweist, **dadurch gekennzeichnet, dass** es ein Mittel zum Erfassen (5) aufweist, um ein Funktionsstörungssignal des unterstützten Startens ausgehend von den empfangenen Informationen zu erstellen, mehrere Codiermittel (500 bis 503) zum Erstellen eines Überwachungssignals für jede empfangene bestimmte Information, und einen Speicher (7) zum Speichern der Überwachungssignale.

2. System zum Diagnostizieren nach Anspruch 1, bei dem, wenn das unterstützte Starten in Betrieb ist, jedes Codiermittel (500 bis 503) geeignet ist, um das Überwachungssignal zu ändern, indem ihm ein Wert zugewiesen wird, der unterschiedlichen Zuständen der empfangenen bestimmten Information entspricht.

3. System zum Diagnostizieren nach Anspruch 2, bei dem jedes Codiermittel (500 bis 503) ein Vergleichsmodul (510, 520, 530, 540) zum Erstellen eines Signals für zufriedenstellenden Zustand ausgehend von dem Vergleich zwischen der empfangenen bestimmten Information und einem Schwellenwert aufweist.

4. System zum Diagnostizieren nach Anspruch 3, bei dem das Erfassungsmittel (5) ein Aktivierungssignal des Codierens und ein Signalgültigkeitssignal für jede empfangene bestimmte Information erstellt und die unterschiedlichen Zustände jeder empfangenen Information ausgehend von dem Signal für zufriedenstellenden Zustand des Signalgültigkeitssignals und des Aktivierungssignals des Codierens bestimmt werden.

5. Verfahren zum Diagnostizieren des Betriebszustands eines unterstützten Startmodus eines Kraftfahrzeugs, bei dem man eine Drehzahlinformation eines Motors des Fahrzeugs, eine Positionsinformation des Gaspedals des Fahrzeugs, eine Positionsinformation des Schaltgetriebes und eine Information über das Moment, das an die Räder übertragen wird, bestimmt, **dadurch gekennzeichnet, dass** man eine Funktionsstörung des unterstützten Startens ausgehend von den empfangenen Informationen erfasst, man jede empfangene bestimmte Information mit Hilfe eines Überwachungssignals codiert und die Überwachungssignale speichert.

6. Verfahren zum Diagnostizieren nach Anspruch 5, bei dem man, wenn das unterstützte Starten in Betrieb ist, jede empfangene Information durch die Änderung des Überwachungssignals codiert, indem ihm ein Wert zugewiesen wird, der unterschiedlichen Zuständen der empfangenen bestimmten Information entspricht.

7. Verfahren zum Diagnostizieren nach Anspruch 6, bei dem man ein Signal für zufriedenstellenden Zustand ausgehend von dem Vergleich zwischen der empfangenen bestimmten Information und einem Schwellenwert erstellt, bevor man jede empfangene Information codiert.

8. Verfahren zum Diagnostizieren nach Anspruch 7, bei dem man ein Aktivierungssignal des Codierens und ein Signalgültigkeitssignal für jede empfangene bestimmte Information erstellt und man die unterschiedlichen Zustände jeder empfangenen Information ausgehend von dem Signal für den zufriedenstellenden Zustand des Signalgültigkeitssignals und des Aktivierungssignals des Codierens bestimmt.
